(19) Europäisches Patentamt
European Patent Office
Office européen des brevets

(11) **EP 2 130 174 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(21) Anmeldenummer: **08716633.6**

(22) Anmeldetag: **19.03.2008**

(51) Int Cl.:
**G06T 5/00** *(2006.01)*

(86) Internationale Anmeldenummer:
**PCT/EP2008/002215**

(87) Internationale Veröffentlichungsnummer:
**WO 2008/116589 (02.10.2008 Gazette 2008/40)**

(54) **VERFAHREN UND VORRICHTUNG ZUR ERMITTLUNG EINER ZELLKONTUR EINER ZELLE**

METHOD AND DEVICE FOR DETERMINING A CELL CONTOUR OF A CELL

PROCÉDÉ ET DISPOSITIF PERMETTANT DE DÉTERMINER UN CONTOUR D'UNE CELLULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.03.2007 DE 102007013971**

(43) Veröffentlichungstag der Anmeldung:
**09.12.2009 Patentblatt 2009/50**

(73) Patentinhaber: **Fraunhofer-Gesellschaft zur Förderung der angewandten Forschung e.V.**
**80686 München (DE)**

(72) Erfinder:
• **ZERFASS, Thorsten**
**55566 Bad Sobernheim (DE)**
• **REHN, Thomas**
**39108 Magdeburg (DE)**
• **WITTENBERG, Thomas**
**91054 Erlangen (DE)**

(74) Vertreter: **Schenk, Markus et al**
**Schoppe, Zimmermann, Stöckeler & Zinkler**
**Patentanwälte**
**Postfach 246**
**82043 Pullach bei München (DE)**

(56) Entgegenhaltungen:
**WO-A-99/52074**

• **REHN, T. AND ZERFASS, T. AND WITTENBERG, T.: "Berandungsgenaue Segmentierung von Plasma und Nucleus bei Leukozyten" BILDVERARBEITUNG FÜR DIE MEDIZIN 2007, 3. Dezember 2007 (2007-12-03), Seiten 252-256, XP002485762 Springer**
• **BAMFORD P ET AL: "Unsupervised cell nucleus segmentation with active contours" SIGNAL PROCESSING, ELSEVIER SCIENCE PUBLISHERS B.V. AMSTERDAM, NL, Bd. 71, Nr. 2, 15. Dezember 1998 (1998-12-15), Seiten 203-213, XP002270669 ISSN: 0165-1684**
• **CHEN, S. AND SHIH, T.Y. AND HSIN-CHU, T.: "On the evaluation of edge preserving smoothing filter" PROCEEDINGS OF GEOINFORMATICS (2002), [Online] 2002, XP002485896 Gefunden im Internet: URL:http://nhmrc.nctu.edu.tw/People/tyshih /Publications/C43.pdf> in der Anmeldung erwähnt**

**Beschreibung**

Die vorliegende Erfindung bezieht sich auf ein Verfahren und eine Vorrichtung zur Ermittlung einer Zellkontur einer Zelle und insbesondere auf berandungsgenaue Segmentierung von Plasma und Kernen bei Leukozyten.

Eine sichere Erkennung und exakte Segmentierung von weißen Blutzellen (Leukozyten) in gefärbten Ausstrichen des peripheren Blutes bildet die Grundlage für eine automatische, bildbasierte Erstellung eines sog. Differenzialblutbildes im Kontext der medizinischen Labordiagnostik (sog. Computer Assistierte Mikroskopie - CAM). Die Vielfältigkeit der in einem Blutausstrich auftretenden weißen Blutzellen, verbunden mit ihrer jeweils charakteristischen Farbverteilung und Texturierung, erhöhen die Schwierigkeit bei der Klassifikation im Rahmen einer vollständigen Automatisierung. Während die automatische Detektion und Segmentierung weißer Blutzellen in digitalen Bildern mittlerweile zum Stand der Technik gehört, ist eine anschließende *berandungsgenaue* Segmentierung von Zellkern und speziell des Zellplasmas im Hinblick einer nachfolgenden Klassifikation noch nicht gelöst. Die digitalen Bilder können dabei in verschiedenen Farbschemas oder Farbräumen vorliegen. Ein RGB-Farbraum spezifiziert die Farbe eines Bildpunktes durch die Anteile der drei Grundfarben (rot, grün, blau), wobei ein HSV-Farbraum die Farbe eines Bildpunktes durch einen H-Wert (Farbtyp), einen S-Wert (Saturierung) und einen V-Wert (value oder Helligkeit) angegeben wird.

Bekannte Ansätze zur Segmentierung von Zellplasma *und* Zellkern weißer Blutzelle greifen oftmals auf Schwellwertverfahren zurück. Dies ist zum Beispiel in Cseke, I.: "A fast segmentation scheme for white blood cell images" in 11th I-APR Int. Conf. On Pattern Recognition Vol.III: Image, Speech & Signal Analysis. (1992) 530-533 und in Liao, Q., Deng, Y.: "An accurate segmentation method for white blood cell images" in: IEEE Intl. Sym. on Biomedical Imaging. (2002) 245-248 beschrieben. Ein in "Leukocyte segmentation and classification in blood-smear images" durch Ramoser, H., Laurain, V., Bischof, H., et al in IEEE Engineering Medicine and Biology Society (2005) 3371-3374 vorgeschlagenes Verfahren führt zusätzlich wahrscheinlichkeitstheoretische Elemente ein, um eine Unterscheidung in Hintergrund, rote Blutkörperchen, sowie Kern und Plasma der Leukozyten zu treffen. Ein Active Contour-Verfahren zur Zellumrissbestimmung kommt in "An automated differential blood count system" durch Ongun, G., Halici, U., Leblebicioglu, K., et al in IEEE Eng, Med. and Biology Soc. 3 (2001) 2583-2586 zum Einsatz. Der in "A novel white blood cell segmentation scheme based on feature space clustering" durch Jiang, K., Liao, Q.M., Xiong, Y. in Soft Comput. 10 (2006) 12-19 vorgestellte Ansatz setzt auf Scale-Space-Filtering zur Bestimmung des Zellkerns und 3D-Watershed-Clustering des ins HSV-Modell transformierten Bildes. Außerdem wird in dem Preprint "Analysis of Blood and Bone Marrow Smears using Digital Image Processing Techniques" von H. Hengen, S. Spoor und M. Pandit eine Methode für ein Auflösen von Clustern von weißen Blutzellen entwickelt. In dem Preprint "Bildverarbeitung für ein motorisiertes Lichtmikroskop zur automatischen Lymphozytenidentifikation" von M. Beller, R. Stotzka, H. Gemmeke, K.F. Weibezahn und G. Knetlitschek wird ein motorisiertes Lichtmikroskop zusammen mit einer CCD-Kamera eingesetzt, um ein Detektionssystem weiter zu entwickeln, das für Lymphozyten angewendet werden kann. In dem Preprint "Automation of Differential Blood count" von N. Sinha und A.G. Ramakrishnan wird eine Technik zum Zählen von weißen Blutzellen entwickelt, die insbesondere den sog. K-Means-Clustering und EM-Algorithmus verwendet. In dem Preprint "Blood Cell Segmentation using EM-algorithm" von den gleichen Autoren wird ein Verfahren zur Segmentation von Blutzellen vorgestellt, die insbesondere den HSV-Farbraum verwendet, und einer Erwartungswertmaximierung (EN) nutzt. In dem Preprint "Statistical Evaluation of Computer extracted Blood Cell Features for Screening Populations to detect Leukemias" von H.M. Aus, H. Harms, V. ter Meulen und U. Gunzer (in NATO ASI Series Vol. F 30) wird eine Methode zur Segmentierung von Zellbildern verwendet, die Farbunterschiede, äquidistante Isogramme, geometrische Operationen mit einem Zellmodell kombiniert. In dem Preprint" Microscopic Image Analysis using mathematical morphology: Application to haematological Cytology" von J. Angulo und G. Flandrin wird ein Verfahren zur Bildanalyse vorgestellt, bei dem mathematische Morphologie zur Mustererkennung verwendet wird. Schließlich wird in WO 99/52074 A ein Verfahren zur Segmentierung von Zellkernen offenbart, welches Graustufenwerte rasterförmig für ein Zwischengebiet zwischen einem inneren und einem äußeren Kreis auswertet.

Ausgehend von diesem Stand der Technik liegt der vorliegenden Erfindung die Aufgabe zugrunde, eine Vorrichtung und ein Verfahren zum Ermitteln einer Zellkontur einer Zelle zu schaffen, die zuverlässig, schnell und in hoher Qualität Ergebnisse liefert.

Diese Aufgabe wird durch ein Verfahren gemäß Anspruch 1, einer Vorrichtung gemäß Anspruch 11 oder ein Computerprogramm gemäß Patentanspruch 15 gelöst.

Der vorliegenden Erfindung liegt die Erkenntnis zugrunde, dass die Zellkontur einer Zelle durch einen vierstufigen Verfahrensablauf bestimmt werden kann. Dazu werden zunächst Bildpunkte ermittelt, die Kandidaten für einen Zellkern darstellt und in einem zweiten Schritt wird aus dieser Kandidatenmenge ein mittlerer Kern-Kandidatenbildpunkt bestimmt. Ausgehend von diesem mittleren Kern-Kandidatenbildpunkt wird in einem dritten Schritt ein erster Rand-Kandidatenbildpunkt bestimmt, indem auf einem vorbestimmten Pfad, der von dem mittleren Kern-Kandidatenbildpunkt weg führt, Farbwerte des Bildes erfasst werden, so dass ein Wechsel von einem ersten Abschnitt zu einem zweiten Abschnitt des Farbraumes einen Rand des Zellplasmas signalisiert. Schließlich wird ausgehend von diesem Rand-Kandidatenbildpunkt ein geschlossener Pfad vorzugsweise innerhalb des zweiten Abschnitts des Pfadraumes bestimmt, so dass das Zellplasma von dem geschlossenem Pfad zumeist eingeschlossen wird. Somit umfasst der letzte Schritt ein Finden fortführender Rand-Kandidatenbildpunkte von dem ersten Rand-Kandidatenbildpunkt aus, die einen die Zelle umgebende Grenze bilden, mittels eines Wegfindungsalgorithmus, der dazu tendiert, kleinere Weglängen und Wege durch Bildpunkte im zweiten Abschnitt des Farbraumes zu bevorzugen.

Eine erfindungsgemäße Vorrichtung weist eine Einrichtung zum Ermitteln von Kern-Kandidatenbildpunkte, eine Einrichtung zum Bestimmen eines mittleren Kern-Kandidatenbildpunktes, eine Einrichtung zum Bestimmen eines ersten Rand-Kandidatenbildpunktes sowie eine Einrichtung zum Finden fortführender Rand-Kandidatenbildpunkte auf.

Insbesondere wird bei Ausführungsbeispielen der vorliegenden Erfindung ein neuartiger Ansatz verfolgt, der sogenannte Level-Set / Fast Marching-Methoden mit einem kürzeste Pfade-Algorithmus kombiniert, um dadurch eine möglichst vollständige und berandungsgenaue Segmentierung von Zellkern und Zellplasma zu erreichen. Als Ausgangsmaterial dienen dabei Lichtmikroskopaufnahmen von Blutabstrichen, die mit einer MGG-Färbung (May-Grünwald-Giemsa-Färbung) behandelt wurden. Dadurch werden bestimmte Bestandteile der Zelle (Zellkern, Zellplasma), Hintergrund, rote Blutzellen etc. entsprechend farblich markiert und die entsprechenden farblichen Charakteristika finden ihren Niederschlag in der Wahl der Parametrisierung des folgenden Verfahrens. Um eine Segmentierung automatisch durchführen zu können, z.B. kann ein dreistufiger Algorithmus verwendet werden, der sich grob in:

1. Bildvorverarbeitung;
2. Auffinden von Kern und Plasma; und
3. Nachbearbeitung und Feinkorrektur

unterteilen lässt.

Da einige Bildelemente wie rote Blutkörperchen (bläulicher Rand durch die Färbung und Optik) und Granulozyten (Textur mit relativ hochfrequenter farblicher Varianz) lokal mit atypischen oder den Hauptalgorithmus störenden Eigenschaften versehen sind, können in der Vorverarbeitung die Bilder zunächst mit einem kantenerhaltenden und rauschunterdrückenden Kuwahara-Filter vorverarbeitet werden. Der Kuwarara Filter ist zum Beispiel in "On the evaluation of edge preserving smoothing filter" durch Chen, S., Shih, T.Y. in: Proceedings of Geoinformatics. (2002) paper C43 beschrieben.

Die zweite Stufe (Auffinden von Kern und Plasma) kann wie folgt zusammengefasst werden. Um die Empfindlichkeit gegenüber Schwankungen der Farbkomponenten weiter zu reduzieren, findet die weitere Verarbeitung z.B. nach einer Transformation des RGB-Eingangsbildes ins HSV-Modell statt. Als erstes werden mittels eines Schwellenwertverfahrens (Thresholding) Kandidaten für den relativ einfach grob zu lokalisierenden Zellkern (dunkle Blaufärbung) bestimmt. Diese dienen zunächst weniger zur Markierung als viel mehr zu einer Mittelpunktsbestimmung der Zelle. Innerhalb dieser Kandidatenmenge $N$ werden zufällig n Punkte $S \subset N$ ausgewählt und derjenige, der $\min_{x \in S} \Sigma_{y \in S} d(x, y)$ erfüllt, also den geringsten Abstand d zu allen anderen Punkten aus $S$ hat, zum vorläufigen Mittelpunkt $m_{seed}$ erklärt. Als nächster Schritt erfolgt eine Bestimmung von Punkten knapp außerhalb des Zellplasmas beziehungsweise eine Markierung des letzteren, um die Kontur der Zelle erfassen zu können. Hierbei kann ein Fast-Marching-Algorithmus zum Einsatz kommen, der zum Beispiel in "Levelset methods and fast marching methods" Cambridge University Press (1999) durch Sethian, J.A. beschrieben ist und eine diskrete Variante der Eikonal-Gleichung: $\|\nabla u(x)\| F(x) = 1$ in u löst, welche die Ausbreitung einer Welle, ausgehend von $m_{seed}$ in Abhängigkeit der den Pixeln zugrunde liegenden Farbeigenschaften $F$, simuliert (wobei $\nabla$ der Nabla-Operator ist und x einen Punkt in der Bildebene bezeichnet).

Im Optimalfall ist durch $\{u < F(m_{seed}) + \varepsilon\}$ mit geeigneter Funktion $F$ und $\varepsilon$ bereits die Zelle beschrieben. Dass dies in der Realität fast nie gegeben ist, liegt zumeist in der unscharfen Trennung der weißen und roten Zellen begründet; das Resultat ist aber zumeist sehr gut geeignet um mit einem anderen Verfahren eine vollständige Trennung herbeizuführen. Als brauchbar für die Segmentierung von Leukozyten hat sich die Funktion $F$ von der folgenden Struktur herausgestellt:

$$F(x) = \begin{cases} \beta & \text{falls} : c(x) \geq \alpha_1 \vee (c(x) \geq \alpha_2 \wedge v(x) \leq \gamma) \\ 0 & \text{sonst} \end{cases} \qquad (1)$$

wobei mit $c(x)$ die Summe der drei Farbkomponenten im RGB-Raum und mit v(x) die Value-Komponente im HSV-Modell im Punkte x bezeichnet. Die Parameter sind so zu wählen, dass mittels $\alpha_1$ der Bild-Hintergrund und $\alpha_2$ bzw. $\gamma$ alles außerhalb von Hintergrund, der Zellkern durch $c(x) < \alpha_2$ und das Zellplasma durch $v(x) > \gamma$ erfasst wird. Um nicht von einer speziellen Farbsituation abhängig zu sein, kann eine iterative Anpassung des Parameters $\gamma$ implementiert werden, $\alpha_1$ und $\alpha_2$ können für Bilderserien unter gleichen Aufnahmebedingungen unverändert bleiben. Der Wert von $\gamma$ hingegen, wird beispielsweise von einem niedrigen Niveau ausgehend schrittweise erhöht, bis bei einem Lauf in Nord-, Süd-, West- und Ostrichtung von Punkten nahe von $m_{seed}$ jeweils Punkte $P_N$, $P_S$, $P_W$, $P_O$, aus $\{u > F(m_{seed}) + \varepsilon\}$ gefunden werden, die nach Wahl der Parameter Bereiche außerhalb der Zelle markieren sollen. Anschließend kann mittels eines Wegfindungsalgorithmus ein Pfad entlang der Kontur der Zelle bestimmt werden. So führt eine Dijkstra-Variante unter Verwendung einer farbabhängigen Kostenfunktion $c(x,y)$ für die (gerichtete) Kante zwischen benachbarten Punkte $x$ und $y$ (8er Nachbarschaft) mit

$$c(x, y) = \|x - y\|_2 (1 + \alpha \, 1_{\{u < F(m_{seed}) + \varepsilon\}}(y)) + \beta \|m_{seed} - y\|_2 + \gamma \, 1_{H_{blue}}(h(y)) \quad (2)$$

zur gewünschten Trennung der Zelle von ihrer Umgebung, wobei $h(x)$ den Hue-Wert im HSV-Modell im Punkt $x$ und $H_{blue}$ eine Untermenge des blauen Hue-Wertebereichs, sowie $1_{A(x)}$ die Indikatorfunktion der Menge $A$ bezeichnet. Die Parameter $\alpha$ und $\gamma$ sind beispielsweise derart gewählt, dass der Pfad möglichst nicht über die bläulich gefärbte Zelle verläuft, während $\beta$ den Weg auch nicht allzu weit von der Zelle wegführen lässt.

Auf solche Weise bestimmte Pfade, die die vier Punkte $P_N$, $P_S$, $P_W$, $P_O$ durch vier Teilpfade verbinden, markieren oftmals den Zellenumriss schon recht genau. Das oben beschriebene Schwellwertverfahren zur Bestimmung des Zellkerns ist zwar geeignet einen guten Ausgangspunkt $m_{seed}$ innerhalb der zu segmentierenden Zelle zu finden, hat sich jedoch als ungeeignet erwiesen, den vollen für das menschliche Auge als solchen wahrnehmbaren Zellkern zu erfassen. Für diese Aufgabe wurde ein anderes Schwellwertverfahren, das beim Verhältnis zwischen Blau- und Grün-Kanal des RGB-Eingangsbildes ansetzt, verwendet.

Da es sich gezeigt hat, dass mit Hilfe des oben beschriebenen Verfahrens bestimmte Pfade Konkavitäten des Zellplasmas nur schwer gerecht werden, kann eine Nachbearbeitung des Pfades das Resultat verbessern. Dabei kann der Pfad punktweise in Richtung $m_{seed}$ verschoben werden und zwar solange wie sich die Punkte auf dem durch die Farbe klar zu erkennenden Hintergrund oder auf auch roten Blutkörperchen befinden. Die so erhaltene Punktemenge, jeweils durch Kanten verbunden und geglättet, stellt ein Ergebnis des gesamten Verfahrens des Zellplasma betreffend dar.

Auch das Ergebnis hinsichtlich des Zellkerns kann mittels eines Nachverarbeitungschrittes verbessert werden. Beispielsweise kann mittels eines morphologischen Open-Close-Filters störende, isoliert liegende Punkte entfernt werden.

Die Leistungsfähigkeit des vorgestellten Algorithmus kann anhand einer Sammlung von Proben überprüft werden, die die verschiedensten Typen von Leukozyten enthalten. Dabei kann mit Hilfe verschiedener Kenngrößen die Qualität der automatischen Segmentierung mit einer zuvor per Hand durchgeführten Segmentierung verglichen werden. Bei der Evaluation kann beispielsweise zum Einen der Dice-Koeffizient

$$C_D(A, B) = \frac{2|A \cap B|}{|A| + |B|} \quad (3)$$

zum Einsatz kommen als auch eine normierte Hausdorff-Metrik

$$H(A, B) = \frac{\max_{x \in A} \min_{y \in B} \|x - y\| + \max_{y \in B} \min_{x \in A} \|x - y\|}{2 \max\{\text{diam } A, \text{diam } B\}} . \quad (4)$$

Die Ergebnisse können für Zellkern und -plasma getrennt in folgendermaßen zusammengefasst werden:

Zellplasma: $C_D = 0{,}94 \pm 0{,}02$; $H = 0{,}91 \pm 0{,}03$
und für den
Zellkern: $C_D = 0{,}94 \pm 0{,}02$; $H = 0{,}90 \pm 0{,}04$.

Die optischen Eindrücke der Segmentierungsergebnisse bestätigen die Resultate der Evaluierung durch Kennzahlen.

Ein erfindungsgemäßes Verfahren zur Segmentierung von Leukozyten in Kern und Plasma, welches anhand von Bildern in Blutausstrichen ausgeführt wird, kann demnach beispielsweise einen Schritt der Vorverarbeitung durch einen Kuwahara-Filter und einen anschließenden Fast-Marching-Verfahren zur Bestimmung der groben Zellumrisse umfassen. Ferner kann ein erfindungsgemäßes Verfahren einen kürzesten Wegealgorithmus umfassen, der zum großen Teil auf den bestimmten Level-Sets operiert, um die Zellfläche zu erhalten. Die Markierung des Zellkerns kann beispielsweise im Wesentlichen durch reine Schwellenwertoperationen erfolgen. Die damit erzielten Ergebnisse erreichen bei einer Evaluierung sowohl auf visueller Basis als auch mittels Standard-Maßzahlen wie Dice-Koeffizienten und Hausdorff-Distanz gute Ergebnisse.

Bevorzugte Ausführungsbeispiele der vorliegenden Erfindung werden nachfolgend bezugnehmend auf die beiliegenden Zeichnungen näher erläutert.

Es zeigen:

Fig. 1      eine Schrittfolge zum Ermitteln einer Zellkontur gemäß einem Ausführungsbeispiel der vorliegenden Erfindung;

Fig. 2      eine erweiterte Schrittfolge zum Ermitteln einer Zellkontur mit Vorbearbeitung und Nachbearbei- tung;

Fig. 3      eine Schleifenverarbeitung zur Bestimmung eines Parameters $\gamma$;

Fig. 4      eine Darstellung des Algorithmus einschließlich Vor- und Nachbearbeitung;

Fig. 5      eine graphische Darstellung einer Zellkontur mit Zellkern und Zellplasma;

Fig. 6      eine Veränderung von Farbwerten im Zellkern, Zellplasma und Hintergrund;

Fig. 7      eine Darstellung zur Veranschaulichung des kür- zesten Wege-Algorithmus;

Fig. 8      Bilder für verschiedene Stufen der Verarbeitung des Algorithmus; und

Fig. 9      Bilder von vier Typen von Leukozyten und deren Verarbeitung in dem erfindungsgemäßen Verfahren.

Bevor im Folgenden die vorliegende Erfindung anhand der Zeichnungen näher erläutert wird, wird darauf hingewiesen, dass gleiche Elemente in den Figuren mit den gleichen oder ähnlichen Bezugszeichen versehen sind und dass eine wiederholte Beschreibung dieser Elemente weggelassen wird.

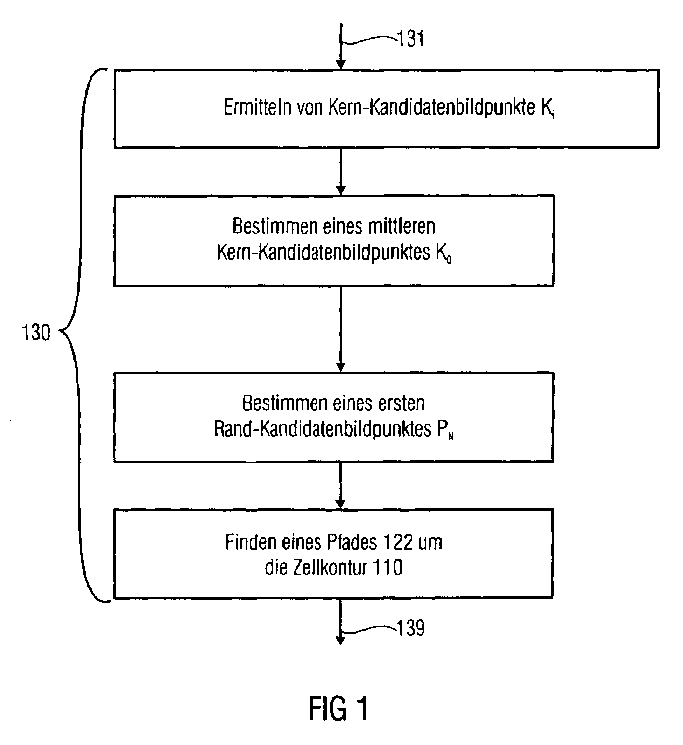

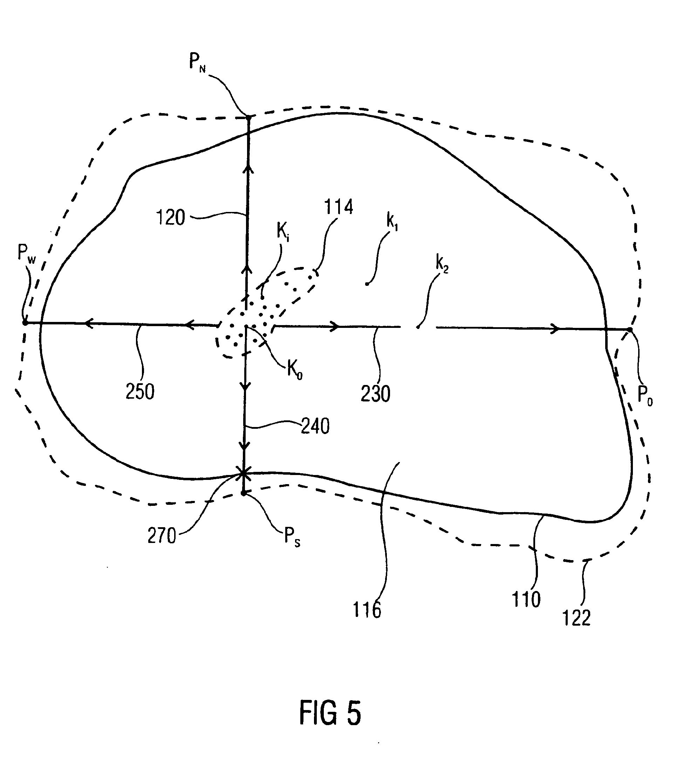

Fig. 1 zeigt eine Schrittfolge zur Ermittlung einer Zellkontur 110 einer Zelle mit einem Zellkern 114 und einem Zellplasma 116 in einem Bild (siehe auch Fig. 5 unten), das an einem Eingang 131 anliegt.

Zunächst werden Kern-Kandidatenbildpunkte $K_i$, die zu dem Zellkern 114 gehören, ermittelt und in einem Folgeschritt wird ein mittlerer Kern-Kandidatenbildpunkt $K_0$ bestimmt, wobei der mittlere Kern-Kandidatenbildpunkt $K_0$ im Innern eines durch die Kern-Kandidatenbildpunkte $K_i$ gebildetes Gebiet liegt. Daran anschließend wird ein erster Rand-Kandidatenbildpunkt $P_N$ bestimmt, wobei der ersten Rand-Kandidatenbildpunkt $P_N$ auf einen von dem mittleren Kern-Kandidatenbildpunkt $K_0$ aus wegführenden vorbestimmtem Pfad 120 liegt, und durch einen Wechsel von einem ersten Abschnitt zu einem zweiten Abschnitt des Farbraumes erfasst wird. In Abhängigkeit eines verwendeten Farbraumes, sind die unterschiedlichen Abschnitte durch unterschiedliche Farbkomponenten gegeben und ein Wechsel kann beispielsweise dadurch signalisiert sein, dass eine dieser Komponenten des verwendeten Farbraumes sich nicht kontinuierlich, sondern sprunghaft ändert. Im Anschluss an die Bestimmung des ersten Rand-Kandidatenbildpunktes $P_N$ wird ein Pfad 122 gefunden, der die Zellkontur 110 im Wesentlichen umschließt, zum Beispiel indem zumindest 90 % des Pfades 122 außerhalb der Zellkontur 110 liegt. Dieses Finden kann durch ein Wegfindungsalgorithmus geschehen, bei dem fortführend Rand-Kandidatenbildpunkte, ausgehend von dem ersten Rand-Kandidatenbildpunkt $P_N$ aus gefunden werden und die eine die Zelle umgebende Grenze bilden. Der Wegfindungsalgorithmus kann dabei derart ausgeführt werden, dass sowohl kleinere Weglängen als auch Wege durch Bildpunkte im zweiten Abschnitt des Farbraumes bevorzugt werden. Dies kann beispielsweise durch eine entsprechend gewählte Kostenfunktion realisiert werden. Das Ergebnis der Ausführung dieser Verfahrensschritte liegt dann an einem Ausgang 139 an.

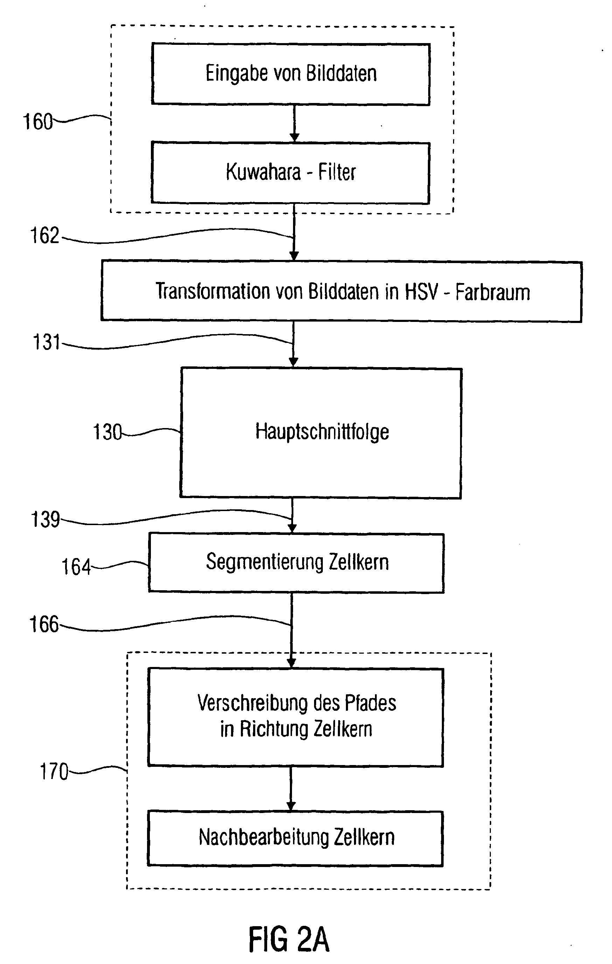

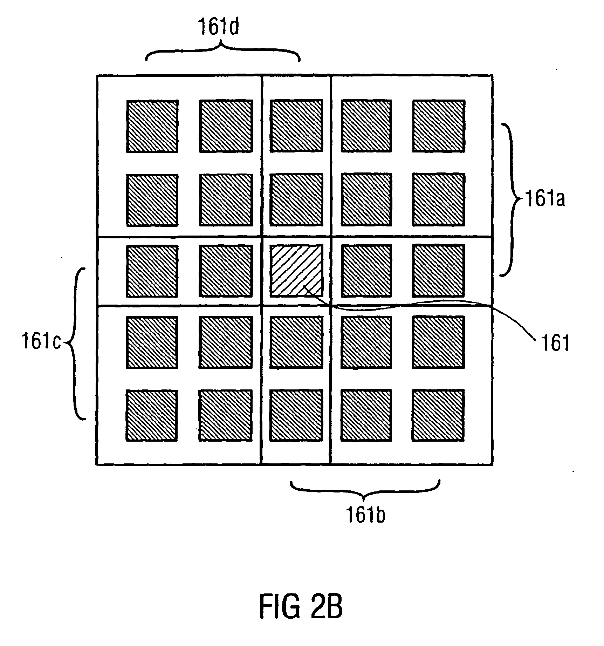

Fig. 2a zeigt eine erweiterte Schrittfolge, wobei die in der Fig. 1 gezeigte Schrittfolge als Hauptschrittfolge 130 dargestellt ist, wobei die Bilddaten am Eingang 131 anliegen und der Ausgang 139 das Resultat des Abarbeitens der Hauptschrittfolge 130 bereitstellt. Gemäß der Schrittfolge aus Fig. 2a erfolgt zunächst eine Eingabe von Bilddaten, z. B. in digitaler Form im RGB-Farbschema. Diese Bilddaten können anschließend in einem Kuwahara-Filter vorbearbeitet werden. Ein Kuwahara-Filter ist ein nicht-linearer glättender Filter, der Kanten erhält. Wie in Fig. 2b gezeigt, werden dabei um einen gegebenen Bildpunkt 161 herum ein Gebiet mit einer ungeraden Anzahl von Bildpunkten (5x5 in Fig. 2b) gebildet, so dass der gegebene Bildpunkt 161 in der Mitte des Gebietes liegt. Schließlich werden vier Regionen 161a, 161b, 161c, 161d gebildet, so dass der zentrale Bildpunkt 161 jeweils ein Eckpunkt der vier Regionen 161a, ... , 161d darstellt. Für jede Region wird eine durchschnittliche Helligkeit mit einer entsprechenden Standardabweichung gebildet. Das Kuwahara-Filter ordnet nun den zentralen Bildpunkt 161 den durchschnittlichen Wert jener Region zu, die die kleinste Standardabweichung aufweist.

Damit ist eine Vorbereitung 160 der Bilddaten abgeschlossen und das Resultat wird an einem Ausgang 162 einem Folgeschritt, bei dem die Bilddaten in einen Farbraum transformiert werden können, der in der Hauptschrittfolge 150 verwendet wird. Das kann beispielsweise der sog. HSV-Farbraum sein. Dabei charakterisiert ein H-Wert den Farbtyp, wie beispielsweise Rot, Blau oder Gelb und wird typischerweise in einer Region oder einem Winkel von 0 bis 360° angegeben. Ein S-Wert bezeichnet die Saturierung des jeweiligen Farbtyps und wird typischerweise in einem Bereich von 0 bis 100 angegeben. Bei manchen Anwendungen wird diese Saturierung auch als Reinheit der jeweiligen Farbe bezeichnet und je geringer die Saturierung einer Farbe ist, umso stärker ist ein gräulicher Farbton erkennbar und umso mehr ist ein Verblassen der Farbe erkennbar. Ein letzter Wert im HSV-Farbraum ist der V-Wert, der die Helligkeit einer Farbe kennzeichnet und typischerweise in Prozent (von 0 und 100 %) angegeben wird. Eine Darstellung des HSV-Farbraumes kann beispielsweise mittels einer Kegelpyramide erfolgen, wobei die Winkelvariable dem H-Wert, die radiale Richtung den S-Wert und die Höhe dem V-Wert entspricht. Dabei entspricht der Spitze der Kegelpyramide der schwarzen Farbe und dem Ursprung der Kegelgrundfläche der weißen Farbe. In diesem Bild kann jeder Bildpunkt durch einen Zeiger dargestellt werden, wobei der Zeiger auf einen der Farbe entsprechenden Punkt innerhalb oder auf dem Rand des Kegels zeigt.

Bei weiteren Ausführungsbeispielen kann auch ein anderer Farbraum verwendet werden, jedoch erweist sich der HSV-Farbraum für die Anwendung der Segmentierung von weißen Blutzellen als günstig. Zum Beispiel ist der Wechsel beim Übergang von Zellplasma 116 zu einem Hintergrund bzw. auch der Übergang vom Zellkern 114 zum Zellplasma 116 im HSV-Farbraum besonders leicht zu detektieren. Zum Beispiel kann ein eindeutiger Sprung in einem der Werte des Farbraumes leicht durch ein Computerprogramm feststellbar sein. Im HSV-Raum kann es beispielsweise zu einem Sprung des Zeigers kommen. Nachdem die Bilddaten in dem HSV-Farbraum transformiert wurden, erfolgt die Abfolge der Schritte, wie sie in Fig. 1 gezeigt wurden und das Resultat liegt an dem Ausgang 139 an. In einem Folgeschritt kann nun eine Segmentierung 164 des Zellkerns 114 ausgeführt werden, das heißt, die Kern-Kandidatenbildpunkte $K_i$ werden zu einem Zellkern 114 verschmolzen, dessen Form gemäß verschiedener Typen variieren kann. Für die Segmentierung 164 des Zellkerns 114 kann ein Schwellwertverfahren verwendet werden, bei dem nicht das HSV-Farbschema zugrunde liegt, sondern bei dem im RGB-Farbraum ein Verhältnis zwischen dem Blau- und dem Grünkanal untersucht wird. Das heißt, dass sich Bildpunkte, die zu einem Zellkern 114 gehören, sich eindeutig in diesem Verhältnis von anderen Bildpunkten unterscheiden.

Das Ergebnis der Segmentierung 164 des Zellkerns 114 liegt am Ausgang 166 an, und die Daten werden anschließend einer Nachbearbeitung 170 zugeführt. Die Nachbearbeitung 170 kann dabei beispielsweise ein Verschieben des Pfades in Richtung des Zellkerns 114 (Anpassung des Pfades an die Zellkontur) aufweisen und in einem letzten Schritt eine Nachbearbeitung des Zellkerns 114 umfassen. Die Verschiebung des Pfades in Richtung des Zellkerns 114 ist deshalb sinnvoll, da an dem Wegfindungsalgorithmus das Finden des Pfades derart ausgeführt wurde, dass Punkte entlang des Pfades, die außerhalb des Zellplasmas 116 liegen, bevorzugt wurden und demzufolge wird der Pfad 122 eher außerhalb des Zellplasmas 116 als innerhalb des Zellplasmas 116 liegen (es wird nur sehr selten zu einer Verletzung der Zellgrenze bzw. der Zellkontur 110 durch den Pfad 122 kommen). Die Verschiebung des Pfades in Richtung des Zellkerns 114 kann dabei derart geschehen, dass punktweise der Pfad 122 in Richtung des Zellkerns 114 verschoben wird und zwar solange, bis der Wechsel vom Abschnitt 2 des Farbraumes zum Abschnitt 1 des Farbraumes erkennbar wird. Somit wird die durch den Pfad 122 eingeschlossene Fläche solange verkleinert, bis sie der Zellkontur 110 der Zelle weitestgehend entspricht. Bei der abschließenden Nachbearbeitung des Zellkerns 114 werden insbesondere Kandidatenbildpunkte $k_i$ eliminiert, die von der Menge der Kern-Kandidatenbildpunkte $K_i$, die eindeutig als Zellkern 114 identifizierbar sind, separiert sind (z. B. isoliert liegende Bildpunkte $k_i$ innerhalb des Zellplasmas 116).

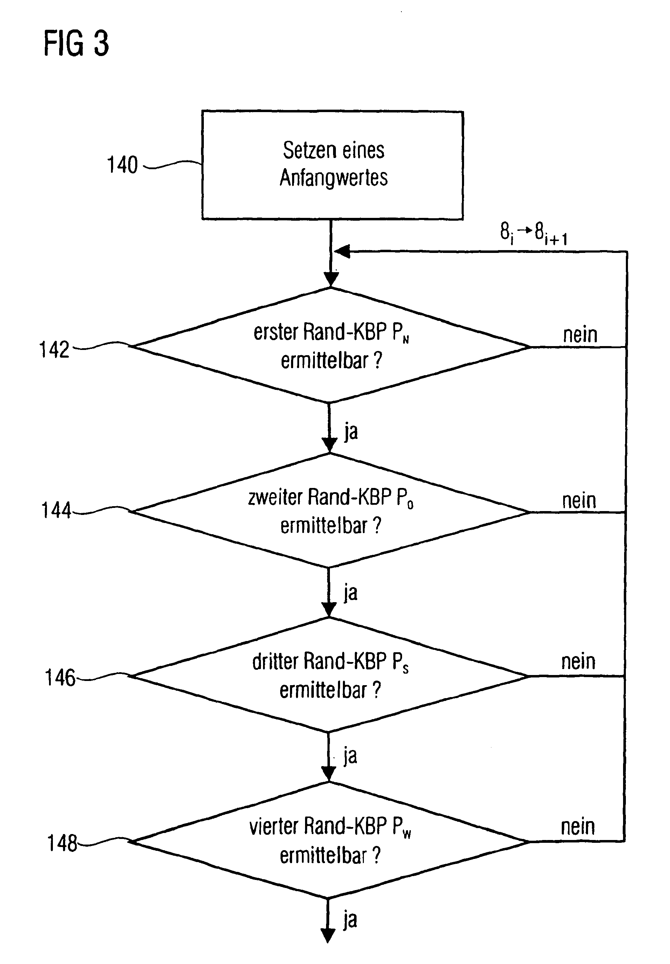

Fig. 3 zeigt einen Schrittzyklus zur Bestimmung eines Parameters $\gamma$, der das Zellplasma 116 parametrisiert. Zum Beispiel kann in dem HSV-Farbmodell das Zellplasma 116 dadurch charakterisiert werden, dass der V-Wert bzw. die V-Komponente im HSV-Modell einen bestimmten Schwellwert überschreitet und dieser Schwellwert entspricht dem Wert $\gamma$. Da dieser Wert oft nicht universell gewählt werden kann, wird er iterativ den jeweiligen Bedingungen angepasst und diese Anpassung kann durch einen Schrittzyklus geschehen, wie er in Fig. 3 gezeigt ist. Da der Rand des Zellplasmas 116 durch ein Unterschreiten der V-Komponente im HSV-Modell unterhalb der Grenze $\gamma$ signalisiert ist, kann ein geeigneter $\gamma$-Wert dadurch festgesetzt werden, dass dieses Unterschreiten der Grenze für mehrere unterschiedliche Pfade eindeutig signalisierbar ist. Dabei wird zunächst in einem Schritt 140 ein Anfangswert $\gamma_0$ gewählt und anschließend entlang eines ersten Pfades 120 wird ein erster Rand-Kandidatenbildpunkt $P_N$ durch ein Unterschreiten der Schwelle $V = \gamma_0$ ermittelt. Sofern diese Ermittlung in dem Prozessschritt 142 nicht möglich ist, kommt es zu einer Rückkopplung und zwar zu einer Erhöhung des Anfangswerts $\gamma_0$ auf einen neuesten Wert $\gamma_1$. Unter Verwendung des Werts $\gamma_1$ erfolgt in dem Prozessschritt 142 wiederum eine Abfrage, ob die Ermittlung eines ersten Rand-Kandidatenbildpunktes $P_N$ möglich ist. Sofern es wiederum nicht möglich ist, folgt eine Wiederholung der Prozessschritte, das heißt, eine weitere

Erhöhung des $\gamma$-Wertes und zwar solange bis der erste Rand-Kandidatenbildpunkt $P_N$ ermittelbar ist. Daran anschließend wird entlang eines zweiten Pfades 230 versucht, ein zweiter Rand-Kandidatenbildpunkt $P_O$ unter Verwendung des aktuellen Wertes für $\gamma$ zu ermitteln. Sofern dies nicht möglich ist, wird wiederum von vorne mit einem neuen, erhöhten Wert für $\gamma$ die Prozedur von Neuem gestartet. Sofern auch der zweite Rand-Kandidatenbildpunkt $P_O$ ermittelbar ist, erfolgt in einem dritten Schritt entlang eines dritten Pfades 240 eine Ermittlung eines dritten Rand-Kandidatenbildpunktes $P_S$. Wenn dies mit dem aktuellen Wert für $\gamma$ möglich ist, erfolgt in einem vierten Schritt 178 eine Bestimmung eines vierten Rand-Kandidatenbildpunktes Pw entlang eines vierten Pfades 250. Nur wenn alle vier Rand-Kandidaten-Bildpunkte $P_N$, $P_O$, $P_S$, $P_W$ für einen bestimmten Wert für $\gamma$ ermittelbar sind, werden die ermittelten Rand-Kandidatenbildpunkte dazu verwendet, um in den Wegfindungsalgorithmus eine Verbindung zwischen den ersten, zweiten, dritten und vierten Rand-Kandidatenbildpunkt $P_N$, $P_O$, $P_S$, $P_W$ zu ermitteln.

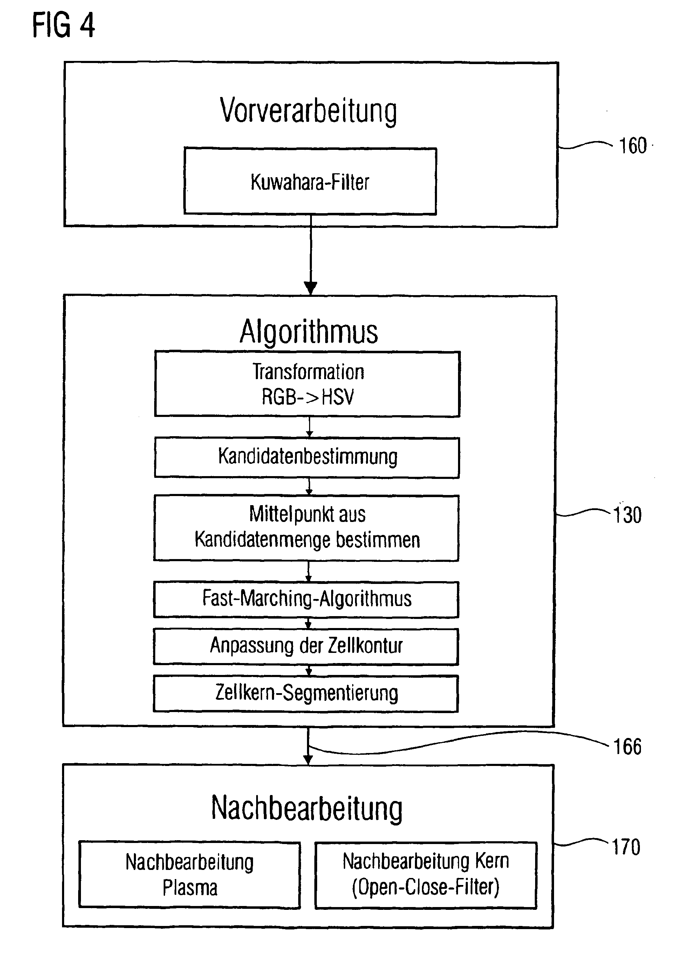

Fig. 4 zeigt ein Ausführungsbeispiel der vorliegenden Erfindung, bei dem das digitale Bild zunächst im RGB-Farbschema und die Bilddaten in einer Vorverarbeitung 160 mittels eines Kuwahara-Filters bearbeitet werden. Anschließend werden die vorverarbeiteten Bilder in das HSV-Farbschema transformiert und es erfolgt eine Kandidatenbestimmung für Kern-Kandidatenbildpunkte $K_i$, die zu dem Zellkern 114 gehören. Daran anschließend wird der Mittelpunkt $K_0$ der Kandidatenmenge bestimmt und schließlich in einem Fast-Marching-Algorithmus kann beispielsweise ein erster Rand-Kandidatenbildpunkt $P_N$ bestimmt werden. Wie zuvor beschrieben, ist es vorteilhaft, wenn nur ein Rand-Kandidatenbildpunkt, sondern vier Rand-Kandidatenbildpunkte $P_N$, $P_O$, $P_S$, $P_W$ entlang vier verschiedener Pfade bestimmt werden, die mittels eines Wegfindungsalgorithmus an die Zellkontur 110 angepasst werden. Anschließend erfolgt die Segmentierung des Zellkerns 114 und die so ermittelten Daten werden an dem Ausgang 166 ausgegeben und in eine Nachbearbeitung 170 weiter verbessert. Die Nachbearbeitung 170 kann beispielsweise eine Nachbearbeitung des Zellplasmas 116 umfassen, bei der der Pfad 122 punktweise in Richtung des Zellkerns 114 so lange verschoben wird, bis er den Rand des Zellplasmas 116 erreicht und darüber hinaus kann eine Nachbearbeitung des Kerns 114 mit dem Ziel erfolgen, dass isolierte Punkte eliminiert werden.

Fig. 5 gibt eine schematische Darstellung der Prozessabfolge anhand eines Beispiels. Es ist eine Anzahl von Kern-Kandidatenbildpunkten $K_i$ gezeigt, die eine äußere Begrenzung 114 aufweisen. Ausgehend von einem mittleren Kern-Kandidatenbildpunkt $K_0$ sind vier Pfade eingezeichnet, ein erster Pfad 120 zu dem Punkt $P_N$, ein zweiter Pfad 230 zu dem Punkt $P_O$, ein dritter Pfad 240 zu dem Punkt $P_S$ und ein vierter Pfad 250 zu dem vierten Rand-Kandidatenbildpunkt Pw. Unter Verwendung des Parameters $\gamma$, so wie es in Fig. 3 gezeigt wurde, kann entlang dieser vier Pfade ein Überschreiten der Zellkonturrandkurve 110 festgestellt werden. Das geschieht z. B. für den dritten Pfad 240, von dem mittleren Kern-Kandidatenbildpunkt $K_0$ zu dem dritten Rand-Kandidatenbildpunkt $P_S$ bei dem Überschreiten des Punktes 270. In analoger Weise erfolgt die Detektierung auch für den ersten Pfad 120, für den zweiten Pfad 230 und für den vierten Pfad 250. Nachdem der erste Rand-Kandidatenbildpunkt $P_N$, der zweite Rand-Kandidatenbildpunkt $P_0$, der dritte Rand-Kandidatenbildpunkt $P_S$ und der vierte Rand-Kandidatenbildpunkt $P_W$ gefunden sind, erfolgt in dem Wegfindungsalgorithmus die Bestimmung des Pfades 122, der alle vier Rand-Kandidatenbildpunkte $P_N$, $P_O$, $P_S$ und $P_W$ verbindet. Wie zuvor beschrieben, basiert der Wegfindungsalgorithmus auf eine Prozedur, so dass der Pfad 122 vorzugsweise außerhalb der durch die Zellkontur 110 dargestellten Zelle bzw. Randes des Zellplasmas 116 verläuft. Bei dem Nachbearbeitungsalgorithmus 170 werden u.a. isoliert liegende Kern-Kandidatenbildpunkte $k_1$ und $k_2$ eliminiert, so dass der Kern durch die Randkurve 114 identifiziert ist. Es sei jedoch hier erwähnt, dass innerhalb einer Zelle auch verschiedene Kerne, die voneinander getrennt sind, vorkommen können. Dies würde jedoch implizieren, dass nicht nur einzelne Kern-Bildpunkte $k_1$ oder $k_2$ im Bild erscheinen würden, sondern dass stattdessen weitere "Wolken" oder Gebiete von Bildpunkten auftreten würden.

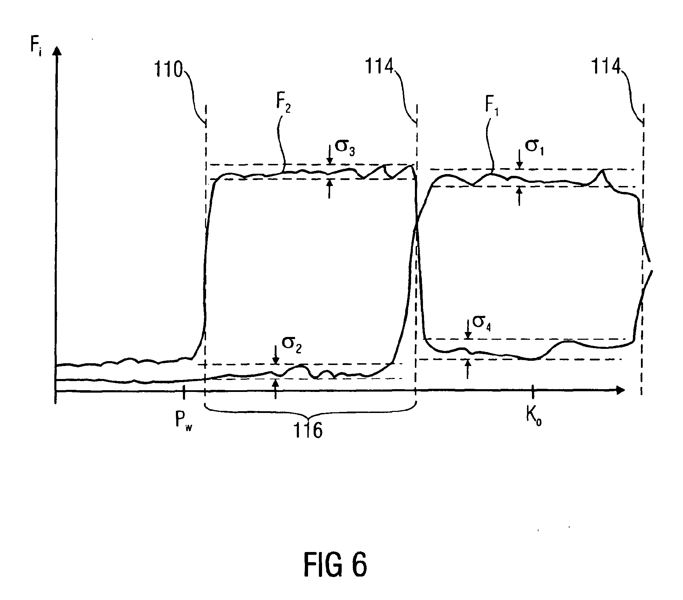

Fig. 6 gibt eine graphische Darstellung, wie sich ein Übergang vom Zellkern 114 zum Zellplasma 116 bzw. vom Zellplasma 116 zum Hintergrund bestimmte Komponenten des Farbraumes sprunghaft verändern können. Es ist dabei die Änderung der Farbkomponente entlang einer Richtung gezeigt, die z.B. von dem mittleren Kern-Kandidatenbildpunkt $K_0$ zu dem vierten Rand-Kandidatenbildpunkt $P_W$ führt. Die gestrichelte Linie 114 stellt die Randkurve des Zellkerns 114 und die gestrichelte Linie 110 die Randkurve der Zellkontur (d.h. Randkurve des Zellplasmas 116) dar. Da der Zellkern 114 eine spezifische Farbe bzw. Farbkombination aufweist, kommt es an der Grenzlinie 114 zu einem plötzlichen Wechsel der entsprechenden Farbkomponente, die in dieser Darstellung mit $F_1$ bezeichnet ist. Die Farbkomponente $F_1$ weist jedoch sowohl innerhalb des Zellkerns 114 (rechts der Linie 114) als auch außerhalb des Zellkerns 114 (links der gestrichelten Linie 114) gewisse Fluktuationen $\sigma_1$, $\sigma_2$ auf, deren Mittelwert sich jedoch deutlich voneinander unterscheiden, beispielsweise um mehr als 30 %.

Das Zellplasma 116 weist eine andere Färbung auf als der Zellkern 114, so dass in dem Gebiet des Zellplasmas 116, das heißt zwischen der gestrichelten Linie 114 und der gestrichelten Linie 110, eine andere Farbkomponente, die hier mit $F_2$ bezeichnet ist, einen deutlich überhöhten Wert aufweist. Auch für die weitere Farbkomponente $F_2$ kann es innerhalb des Zellplasmas 116 als auch außerhalb des Zellplasmas 116 zu Fluktuationen $\sigma_3$, $\sigma_4$ kommen, wobei jedoch Mittelwerte für $F_2$ sich innerhalb und außerhalb des Zellplasmas 116 deutlich z.B. um mehr als 30 % voneinander unterscheiden.

Die Einfärbung des Zellkerns 114 als auch des Zellplasmas 116 und des Zellhintergrunds (links der Linie 110) erfolgt dabei durch eine entsprechend gewählte Vorverarbeitung des Blutausstriches und kann von dem gewählten Verfahren abhängig sein.

Um die Rand-Kandidatenbildpunkte $P_N$, $P_O$, $P_S$ und $P_W$ zu identifizieren, wurde ein Wechsel von einem ersten Abschnitt zu einem zweiten Abschnitt des Farbraumes verwendet und dieser Wechsel entspricht dem deutlichen Abfall der Komponente $F_2$ bei der gestrichelten Linie 110. Das heißt, das entsprechend gewählte Verfahren sollte sensitiv für einen plötzlichen Abfall der Komponente $F_2$ sein, nicht jedoch auf einem plötzlichen Anstieg der Komponente $F_2$, wie er beispielsweise bei der Kerngrenzlinie 114 auftritt.

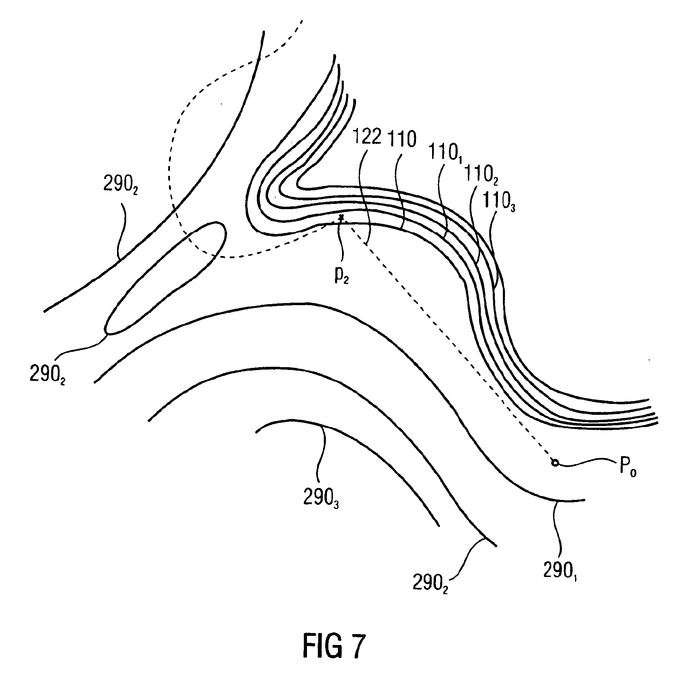

Fig. 7 gibt eine graphische Veranschaulichung des Wegfindungsalgorithmus, der verwendet wird, um eine Verbindung zwischen den Randkandidatenbildpunkten $P_N$, $P_O$, Ps und $P_W$ zu finden. Der Wegfindungsalgorithmus basiert auf einer Kostenfunktion, so dass der bevorzugte Weg durch minimale Kosten ausgezeichnet ist. Fig. 7 gibt eine graphische Darstellung für eine solche Kostenfunktion in Form eines Höhenprofils, wobei die Grenze der Zellkontur 110 mit der Linie 110 gekennzeichnet ist und der Wegfindungsalgorithmus den Pfad 122 liefert. Die Kostenfunktion ist dabei derart gewählt, dass ein Überschreiten der Linie 110 bestraft wird, so dass das Resultat des Wegfindungsalgorithmus nahezu ausschließlich außerhalb der Linie 110, das heißt außerhalb der Zellkontur, verläuft. Dies geschieht dadurch, dass die Kostenfunktion ab der Linie 110 sehr stark ansteigt, was sich in einer Häufung von Höhenlinien $110_1$, $110_2$, $110_3$, ..., zeigt. Andererseits sollte der Pfad 122 sich auch nicht zu weit von der Zellkonturlinie 110 entfernen, so dass eine geeignet gewählte Kostenfunktion auch mit zunehmendem Abstand von der Zellkonturgrenzlinie 110 ansteigt. Dies ist durch die Höhenlinien $290_1$, $290_2$ und $290_3$ gegeben.

Der Wegfindungsalgorithmus bestimmt den Pfad 122 möglichst "im Tal", d.h. unter Vermeidung eines Überschreitens von möglichst wenigen Höhenlinien. Andererseits wird entlang einer Höhenlinie oder entlang einer Ebene mit gleicher Höhenlinie der Weg geometrisch minimiert wird und somit weitgehend als eine Gerade verlaufen. Dies ist der Fall für den Pfad 122 von dem Punkt $P_O$ bis zu dem Punkt $p_2$, bei dem der Pfad 122 aufgrund des Überschreitens der Zellkonturgrenzlinie 110 sich plötzlich ändert, so dass das Innere der Zellkonturgrenzlinie 110 sofort wieder verlassen wird. Daran anschließend erfolgt zunächst eine gradlinige Fortführung des Pfades 122, der wegen der leicht ansteigenden Kostenfunktion bei der Höhenlinie $290_2$ sich in einem weiten Bogen hin zur Zellkontur 122 fortsetzt. Dieser Wegfindungsalgorithmus wird solange fortgesetzt, bis ein geschlossener Weg entsteht, der sich von wenige Ausnahmen abgesehen (wie bei dem Punkt $p_2$ zum Beispiel) um die Zellkonturgrenzlinie 110 herum bewegt.

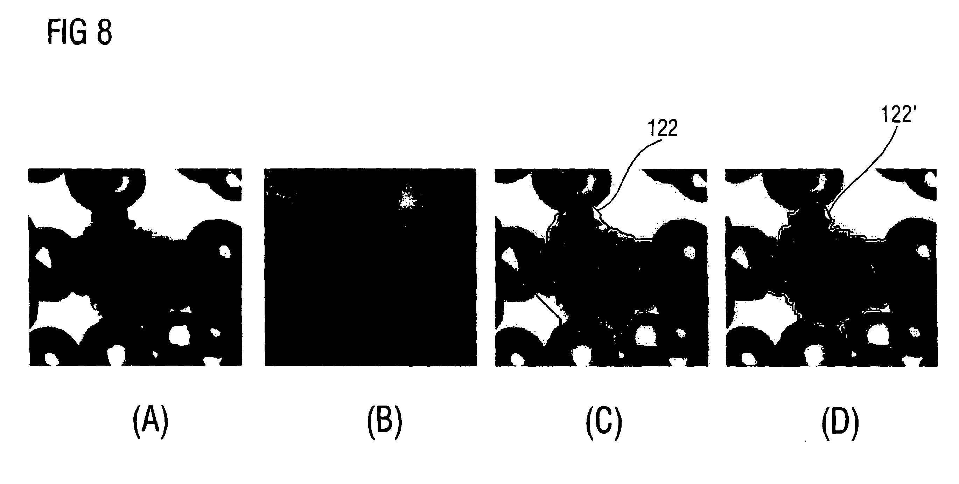

Fig. 8 zeigt vier verschiedene Bilder für vier verschiedene Stadien bei der Ausführung des Algorithmus. Fig. 8a zeigt ein Ausgangsbild und Fig. 8b die Zellkonturverteilung, die mittels eines Fast-Marching-Algorithmus erhalten wurde. In Fig. 8c ist der Pfad 122 als Ergebnis der Wegfindungsalgorithmen vor der Nachbearbeitung und Fig. 8d ein modifizierter Pfad 122' als Ergebnis der Nachbearbeitung (d.h. einer punktweisen Verschiebung nach innen) gezeigt.

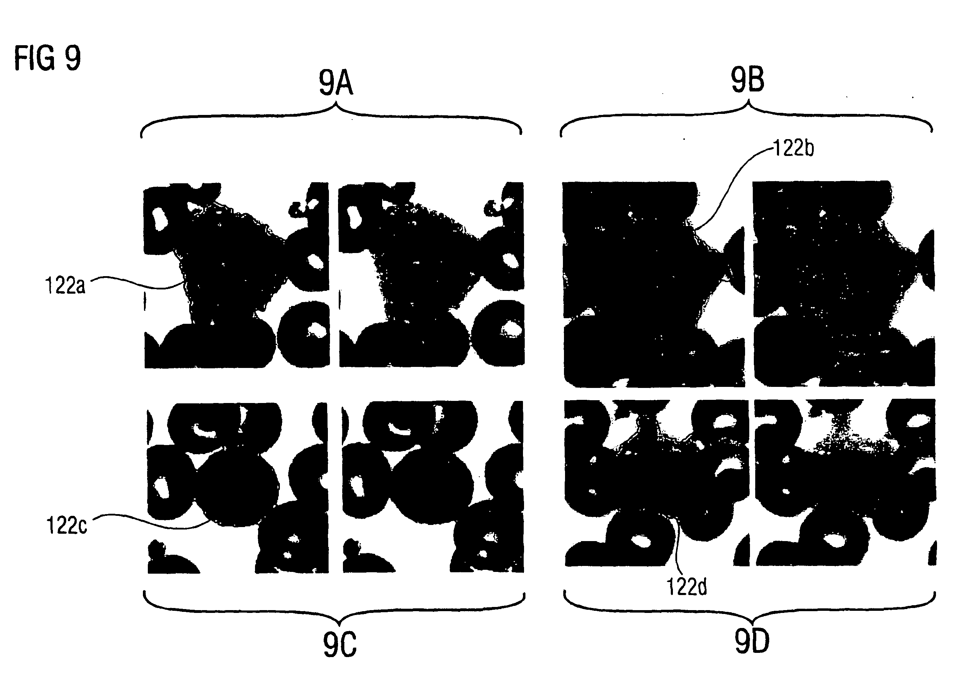

In Fig. 9 sind vier verschiedene Typen von Leukozyten dargestellt, wobei Segmentierungsergebnisse von Zellkern 114 und Zellplasma 116 (durch die Pfade 122a, 122b. 122c und 122d) gezeigt sind. Fig. 9b zeigt zum Beispiel mehrere Zellkerne, Fig. 9c zeigt ein Beispiel für Monozyten und Fig. 9a ein Zellkern 114, der ein Loch aufweist.

Zusammenfassend kann das erfindungsgemäße Verfahren wie folgt beschrieben werden. Die Segmentierung von Zellkern 114 und Zellplasma 116 weißer Blutzellen bildet die Grundlage für die Erstellung eines automatischen, bildbasierten Differenzialblutbildes. In einem erfindungsgemäßen Verfahren zur entsprechenden Segmentierung von Leukozyten kann zunächst eine Vorverarbeitung durch ein Kuwahara-Filter vorgenommen und anschließend ein Fast-Marching-Verfahren zu einer Bestimmung der groben Zellumrisse verwendet werden. Um die Zellflächen zu erhalten, kann anschließend ein kürzester Wege-Algorithmus angewendet werden. Die Markierung des Zellkerns 114 kann z.B. durch eine Schwellenwertoperation erfolgen. Eine Evaluierung des erfindungsgemäßen Verfahrens kann mit Hilfe einer repräsentativen Stichprobe erfolgen und mit einer Handsegmentierung auf der Basis von Dice-Koeffizienten sowie der Hausdorff-Distanz verglichen werden.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Verfahren zum Ermitteln einer Zellkontur (110) einer Zelle mit einem Zellkern (114) und einem Zellplasma (116) in einem Bild der Zelle, mit:

Ermitteln von Kern-Kandidatenbildpunkten ($K_i$), die zu dem Zellkern (114) gehören;

Bestimmen eines im Innern eines durch die Kern-Kandidatenbildpunkte ($K_i$) gebildeten Gebietes liegenden Bildpunktes, um einen mittleren Kern-Kandidatenbildpunkt ($K_0$) zu erhalten;

Bestimmen eines ersten Rand-Kandidatenbildpunktes ($P_N$) als ein Bildpunkt auf einem von dem mittleren Kern-Kandidatenbildpunkt ($K_0$) aus wegführenden vorbestimmten Pfad (120) durch Erfassen eines Wechsels von einem ersten Abschnitt zu einem zweiten Abschnitt eines Farbraums; und

Finden fortführender Rand-Kandidatenbildpunkte von dem ersten Rand-Kandidatenbildpunkt ($P_N$) aus, die eine die Zelle umgebende Grenze (122) bilden, mittels eines Wegfindungsalgorithmus unter Nutzung einer farbabhängigen Kostenfunktion, wobei der Wegfindungsalgorithmus dazu tendiert, sowohl kleinere Weglängen als auch Wege durch Bildpunkte im zweiten Abschnitt des Farbraumes zu bevorzugen.

2. Verfahren gemäß Anspruch 1, bei dem das Ermitteln der Kern-Kandidatenbildpunkte ($K_i$) ein Überprüfen von Bildpunkten aufweist, ob eine Summe ihrer drei Farbkomponenten in einem RGB-Farbraum eine vorbestimmte Schwelle unterschreitet.

3. Verfahren gemäß einem der vorhergehenden Ansprüche, bei dem ferner ein zweiter Rand-Kandidatenbildpunkt ($P_0$), ein dritter Rand-Kandidatenbildpunkt ($P_S$) und ein vierter Rand-Kandidatenbildpunkt ($P_W$) als Bildpunkte auf weiteren von dem mittleren Kern-Kandidatenbildpunkt ($K_O$) aus in unterschiedliche Richtungen wegführenden vorbestimmten Pfaden (230, 240, 250) durch Erfassen eines Wechsels von dem ersten Abschnitt zu dem zweiten Abschnitt des Farbraums bestimmt werden.

4. Verfahren gemäß einem der vorhergehenden Ansprüche, bei dem der Schritt des Findens fortführender Rand-Kandidatenbildpunkte mittels des Wegfindungsalgorithmus unter Verwendung einer Kostenfunktion erfolgt, wobei die Kostenfunktion ein Entfernen von der Zellkontur (110) weg gegenüber einem Überschreiten der Zellkontur (110) bevorzugt.

5. Verfahren gemäß einem der vorhergehenden Ansprüche, bei dem der Wegfindungsalgorithmus eine Kostenfunktion verwendet, wobei bei konstanter Kostenfunktion der Wegfindungsalgorithmus einen gradlinigen Weg liefert.

6. Verfahren gemäß einem der vorhergehenden Ansprüche, bei dem der Schritt des Bestimmens eines ersten Rand-Kandidatenbildpunktes ($P_N$) als Farbraum ein HSV-Farbraum mit einer H-Komponente, eine S-Komponente und eine V-Komponente verwendet wird und bei dem Bildpunkte des Zellplasmas (116) durch ein Überschreiten einer vorbestimmten Grenze ($\gamma$) der V-Komponente des HSV-Farbraums bestimmt werden.

7. Verfahren gemäß Anspruch 6, bei dem die vorbestimmte Grenze $\gamma$ iterativ angepasst wird, so dass auf vier verschiedenen Pfaden (120, 230, 240, 250), die von dem mittleren Kern-Kandidatenbildpunkt ($K_O$) aus wegführen, vier Rand-Kandidatenbildpunkte ($P_N$, $P_O$, $P_S$, $P_W$) gefunden werden.

8. Verfahren gemäß einem der vorhergehenden Ansprüche, dass ferner einen Schritt eines Klassifizierens eines Zellkerns (114) aufweist, wobei das Segmentieren eines Zellkerns (114) ein Verwenden eines Verhältnisses einer Blau-Komponente zu einer Grün-Komponente eines RGB-Farbraumes umfasst.

9. Verfahren gemäß einem der vorhergehenden Ansprüche, das ferner eine Nachbearbeitung (170) aufweist und die Nachbearbeitung (170) ein punktweises Verschieben des Pfades (122), der mittels des Wegfindungsalgorithmus gefunden wurde, umfasst.

10. Verfahren gemäß einem der vorhergehenden Ansprüche, bei dem Schritt des Ermittelns von Kern-Kandidatenbildpunkten ($K_i$) ein Ermitteln von Bildpunkten des Bildes, die in einem ersten vorbestimmten Bereich des Farbraumes liegen, umfasst.

11. Vorrichtung zum Ermitteln einer Zellkontur (110) einer Zelle mit einem Zellkern (114) und einem Zellplasma (116) in einem Bild der Zelle, mit:

einer Einrichtung zum Ermitteln von Kern-Kandidatenbildpunkten ($K_i$), die zu dem Zellkern (114) gehören;

einer Einrichtung zum Bestimmen eines im Innern eines durch die Kern-Kandidatenbildpunkte ($K_i$) gebildeten Gebietes (114) liegenden Bildpunktes, um einen mittleren Kern-Kandidatenbildpunkt ($K_0$) zu erhalten;

einer Einrichtung zum Bestimmen eines ersten Rand-Kandidatenbildpunktes ($P_N$) als ein Bildpunkt auf einem von dem mittleren Kern-Kandidatenbildpunkt ($K_0$) aus wegführenden vorbestimmten Pfad (120) durch Erfassen eines Wechsels von einem ersten Abschnitt zu einem zweiten Abschnitt eines Farbraumes; und

einer Einrichtung zum Finden fortführender Rand-Kandidatenbildpunkte von dem ersten Rand-Kandidatenbildpunkt ($P_N$) aus, die eine die Zelle umgebende Grenze (122) bilden, mittels eines Wegfindungsalgorithmus unter Nutzung einer farbabhängigen Kostenfunktion, der dazu tendiert, sowohl kleinere Weglängen als auch Wege durch Bildpunkte im zweiten Abschnitt des Farbraumes zu bevorzugen.

12. Vorrichtung gemäß Anspruch 11, die ferner eine Einrichtung zur Transformation von einem RGB-Farbraum in ein HSV-Farbraum aufweist.

13. Vorrichtung gemäß einem der Ansprüche 11 oder 12, die ferner eine Einrichtung zur Zellkern-Klassifizierung aufweist.

14. Vorrichtung gemäß einem der Ansprüche 11 bis 13, die ferner eine Einrichtung zur Nachbearbeitung (170) des Zellplasmas (116) aufweist, wobei die Nachbearbeitung (170) eine Verschiebung des durch den Wegfindungsalgorithmus bestimmten Weges aufweist.

15. Computerprogramm mit einem Programmcode zur Durchführung eines Verfahrens gemäß einem der Ansprüche 1 bis 10, wenn das Computerprogramm auf einem Computer abläuft.

**Claims**

1. A method for determining a cell contour (110) of a cell comprising cell nucleus (114) and cytoplasm (116) in an image of the cell, comprising:

determining nucleus candidate pixels ($K_i$) belonging to the cell nucleus (114);

determining a pixel inside the area formed by the nucleus candidate pixels ($K_i$) for obtaining a central nucleus candidate pixel ($K_0$);

determining a first edge candidate pixel ($P_N$) as a pixel on a predetermined path (120) leading away from the central nucleus candidate pixel ($K_0$) by detecting a change from a first section to a second section of a color space; and

finding edge candidate pixels leading away from the first edge candidate pixel ($P_N$),

forming a boundary (122) surrounding the cell, via a path-finding algorithm by utilizing a color-dependent cost function, said path-finding algorithm tending to prefer both smaller path lengths and paths through pixels in the second section of the color space.

2. The method according to claim 1, wherein determining the nucleus candidate pixels ($K_i$) comprises checking pixels as to whether the sum of their three color components in an RGB color space falls below a predetermined threshold.

3. The method according to one of the previous claims, wherein further a second edge candidate pixel ($P_O$), a third edge candidate pixel ($P_S$) and a fourth edge candidate pixel ($P_W$) are determined on further predetermined paths (230, 240, 250) leading away from the central nucleus candidate pixel ($K_O$) in different directions by detecting a change from the first section to the second section of the color space.

4. The method according to one of the previous claims, wherein the step of finding edge candidate pixels, which are leading away, via the path-finding algorithm is performed by using a cost function, wherein the cost function prefers moving away from the cell contour (110) as compared to crossing the cell contour (110).

5. The method according to one of the previous claims, wherein the path-finding algorithm uses a cost function, wherein the path-finding algorithm provides a straight path with a constant cost function.

6. The method according to one of the previous claims, wherein, in the step of determining a first edge candidate pixel ($P_N$), an HSV color space having an H component, an S component and a V component is used as a color space, and wherein pixels of the cytoplasm (116) are determined by crossing a predetermined boundary ($\gamma$) of the V component of the HSV color space.

7. The method according to claim 6, wherein the predetermined boundary $\gamma$ is iteratively adapted, so that four edge candidate pixels ($P_N$, $P_O$, $P_S$, $P_W$) are found on four different paths (120, 230, 240, 250) leading away from the central nucleus candidate pixel ($K_O$).

8. The method according to one of the previous claims, further comprising a step of classifying a cell nucleus (114), wherein segmenting a cell nucleus (114) comprises using a ratio of a blue component to a green component of an RGB color space.

9. The method according to one of the previous claims, further comprising post-processing (170), and the post-processing (170) comprising point-by-point shifting of the path (122) found by the path-finding algorithm.

10. The method according to one of the previous claims, wherein the step of determining nucleus candidate pixels ($K_i$) comprises determining pixels of the image within a first predetermined area of the color space.

11. An apparatus for determining a cell contour (110) of a cell having a cell nucleus (114) and a cytoplasm (116) in an image of the cell, comprising:

   a means for determining nucleus candidate pixels ($K_i$) belonging to the cell nucleus (114);
   a means for determining a pixel inside the area (114) formed by the nucleus candidate pixels ($K_i$) for obtaining a central nucleus candidate pixel ($K_0$);
   a means for determining a first edge candidate pixel ($P_N$) as a pixel on a predetermined path (120) leading away from the central nucleus candidate pixel ($K_0$) by detecting a change from a first section to a second section of a color space;
   and
   a means for finding edge candidate pixels leading away from the first edge candidate pixel ($P_N$), forming a boundary (122) surrounding the cell, via a path-finding algorithm by utilizing a color-dependent cost function, said path-finding algorithm tending to prefer both smaller path lengths and paths through pixels in the second section of the color space.

12. The apparatus according to claim 11, further comprising a means for transforming from an RGB color space to an HSV color space.

13. The apparatus according to one of claims 11 or 12, further comprising a means for cell nucleus classification.

14. The apparatus according to one of claims 11 to 13, further comprising a means for post-processing (170) the cytoplasm (116), wherein post-processing (170) comprises shifting a path determined by the path-finding algorithm.

15. A computer program having a program code for performing a method according to one of claims 1 to 10 when the computer program runs on a computer.


**Revendications**

1. Procédé pour déterminer un contour (110) d'une cellule avec un noyau de cellule (114) et un plasma de cellule (116) dans une image de la cellule, avec:

   déterminer des points d'image candidats de noyau ($K_i$) appartenant au noyau de cellule (114);
   déterminer un point d'image situé à l'intérieur d'une région formée par les points d'image candidats de noyau ($K_i$), pour obtenir un point d'image candidat de noyau central ($K_0$);
   déterminer un premier point d'image candidat de bord ($P_N$) comme point d'image sur un trajet prédéterminé (120) s'éloignant du point d'image candidat de noyau central ($K_0$) en saisissant un changement d'un premier segment à un deuxième segment d'un espace de couleurs; et
   trouver des points d'image candidats de bord continus à partir du premier point d'image candidat de bord ($P_N$) qui constituent une limite (122) entourant la cellule, au moyen d'un algorithme de détection de trajet à l'aide d'une fonction de coût fonction de la couleur, l'algorithme de détection de trajet tendant à préférer tant des longueurs de trajet plus courtes que des trajets passant par des points d'image dans le deuxième segment de l'espace de couleurs.

2. Procédé selon la revendication 1, dans lequel la détermination des points d'image candidats de noyau ($K_i$) présente une vérification des points d'image pour savoir si une somme de leurs trois composantes de couleur dans un espace de couleurs RGB descend au-dessous d'un seuil déterminé.

3. Procédé selon l'une des revendications précédentes, dans lequel sont par ailleurs déterminés un deuxième point d'image candidat de bord ($P_O$), un troisième point d'image candidat de bord (Ps) et un quatrième point d'image candidat de bord (Pw) comme points d'image sur d'autres trajets prédéterminés (230, 240, 250) s'éloignant dans différentes directions à partir du point d'image candidat de noyau central ($K_0$), en saisissant un changement du premier segment au deuxième segment de l'espace de couleurs.

4. Procédé selon l'une des revendications précédentes, dans lequel l'étape consistant à trouver des points d'image candidats de bord continus a lieu au moyen de l'algorithme de détection de trajet à l'aide d'une fonction de coût, la fonction de coût préférant un éloignement du contour de cellule (110) à un dépassement du contour de cellule (110).

5. Procédé selon l'une des revendications précédentes, dans lequel l'algorithme de détection de trajet utilise une fonction de coût, l'algorithme de détection de trajet fournissant, à fonction de coût constante, un trajet en ligne droite.

6. Procédé selon l'une des revendications précédentes, dans lequel l'étape consistant à déterminer un premier point d'image candidat de bord ($P_N$) utilise, comme espace de couleurs, un espace de couleurs HSV avec une composante H, une composante S et une composante V et dans lequel les points d'image du plasma de cellule (116) sont déterminés par un dépassement d'une limite prédéterminée ($\gamma$) de la composante V de l'espace de couleurs HSV.

7. Procédé selon la revendication 6, dans lequel la limite prédéterminée ($\gamma$) est adaptée de manière itérative, de sorte que soient trouvés, sur quatre trajets différents (120, 230, 240, 250) qui s'éloignent à partir du point d'image candidat de noyau central (Ko), quatre points d'image candidats de bord ($P_N$, $P_O$, $P_S$, $P_W$).

8. Procédé selon l'une des revendications précédentes, présentant par ailleurs une étape consistant à classifier un noyau de cellule (114), la segmentation d'un noyau de cellule (114) comportant l'utilisation d'un rapport entre une composante bleue et une composante verte d'un espace de couleurs RGB.

9. Procédé selon l'une des revendications précédentes, présentant par ailleurs un post-traitement (170) et le post-traitement (170) comportant un déplacement point par point du trajet (122) qui a été trouvé au moyen de l'algorithme de détection de trajet.

10. Procédé selon l'une des revendications précédentes, dans lequel l'étape consistant à déterminer des points d'image candidats de noyau ($K_i$) comporte la détermination de points de l'image qui se situent dans une première zone prédéterminée de l'espace de couleurs.

11. Dispositif pour déterminer un contour (110) d'une cellule avec un noyau de cellule (114) et un plasma de cellule (116) dans une image de la cellule, avec:

> un moyen pour déterminer des points d'image candidats de noyau ($K_i$) appartenant au noyau de cellule (114);
> un moyen pour déterminer un point d'image situé à l'intérieur d'une zone (114) formée par les points d'image candidats de noyau ($K_i$), pour obtenir un point d'image candidat de noyau central ($K_0$);
> un moyen pour déterminer un premier point d'image candidat de bord ($P_N$) comme point d'image sur un trajet prédéterminé (120) s'éloignant du point d'image candidat de noyau central ($K_O$) en saisissant un changement d'un premier segment à un deuxième segment d'un espace de couleurs; et
> un moyen pour trouver des points d'image candidats de bord continus à partir du premier point d'image candidat de bord ($P_N$) qui forment une limite (122) entourant la cellule, au moyen d'un algorithme de détection de trajet à l'aide d'une fonction de coût fonction de la couleur qui tend à préférer tant les longueurs de trajet plus courtes que les trajets passant par des points d'image dans le deuxième segment de l'espace de couleurs.

12. Dispositif selon la revendication 11, présentant par ailleurs un moyen pour la transformation d'un espace de couleurs RGB à un espace de couleurs HSV.

13. Dispositif selon l'une des revendications 11 ou 12, présentant par ailleurs un moyen de classification de noyau de cellule.

14. Dispositif selon l'une des revendications 11 à 13, présentant par ailleurs un moyen de post-traitement (170) du plasma de cellules (116), le post-traitement (170) présentant un déplacement du trajet déterminé par l'algorithme de détection de trajet.

**15.** Programme d'ordinateur avec un code de programme pour réaliser un procédé selon l'une des revendications 1 à 10 lorsque le programme d'ordinateur est exécuté sur un ordinateur.

131

Ermitteln von Kern-Kandidatenbildpunkte $K_i$

Bestimmen eines mittleren
Kern-Kandidatenbildpunktes $K_0$

130

Bestimmen eines ersten
Rand-Kandidatenbildpunktes $P_N$

Finden eines Pfades 122 um
die Zellkontur 110

139

# FIG 1

**FIG 2A**

FIG 2B

# FIG 3

140 — Setzen eines Anfangwertes

$8_i \rightarrow 8_{i+1}$

142 — erster Rand-KBP $P_N$ ermittelbar ? — nein

ja

144 — zweiter Rand-KBP $P_O$ ermittelbar ? — nein

ja

146 — dritter Rand-KBP $P_s$ ermittelbar ? — nein

ja

148 — vierter Rand-KBP $P_w$ ermittelbar ? — nein

ja

# FIG 4

```
┌─────────────────────────────────────────────┐
│          Vorverarbeitung                     │
│                                              │────── 160
│   ┌─────────────────────────────────────┐    │
│   │        Kuwahara-Filter              │    │
│   └─────────────────────────────────────┘    │
└─────────────────────────────────────────────┘
                      │
                      ▼
┌─────────────────────────────────────────────┐
│            Algorithmus                       │
│                                              │
│   ┌─────────────────────────────────────┐    │
│   │         Transformation              │    │
│   │          RGB->HSV                   │    │
│   └─────────────────────────────────────┘    │
│                   │                          │
│   ┌─────────────────────────────────────┐    │
│   │      Kandidatenbestimmung           │    │
│   └─────────────────────────────────────┘    │
│                   │                          │────── 130
│   ┌─────────────────────────────────────┐    │
│   │        Mittelpunkt aus              │    │
│   │   Kandidatenmenge bestimmen         │    │
│   └─────────────────────────────────────┘    │
│                   │                          │
│   ┌─────────────────────────────────────┐    │
│   │    Fast-Marching-Algorithmus        │    │
│   └─────────────────────────────────────┘    │
│                   │                          │
│   ┌─────────────────────────────────────┐    │
│   │    Anpassung der Zellkontur         │    │
│   └─────────────────────────────────────┘    │
│                   │                          │
│   ┌─────────────────────────────────────┐    │
│   │    Zellkern-Segmentierung           │    │
│   └─────────────────────────────────────┘    │
└─────────────────────────────────────────────┘
                      │                    ────── 166
                      ▼
┌─────────────────────────────────────────────┐
│          Nachbearbeitung                     │
│                                              │────── 170
│  ┌──────────────────┐  ┌──────────────────┐  │
│  │ Nachbearbeitung  │  │ Nachbearbeitung  │  │
│  │    Plasma        │  │ Kern             │  │
│  │                  │  │ (Open-Close-     │  │
│  │                  │  │  Filter)         │  │
│  └──────────────────┘  └──────────────────┘  │
└─────────────────────────────────────────────┘
```

FIG 5

FIG 6

FIG 7

FIG 8

(A)        (B)        (C)        (D)

FIG 9

9A    9B

122b

122a

122c

9C    9D

122d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9952074 A

**In der Beschreibung aufgeführte Nicht-Patentliteratur**

- **Cseke, I.** A fast segmentation scheme for white blood cell images'' in 11th I-APR Int. Conf. On Pattern Recognition. *Image, Speech & Signal Analysis,* 1992, vol. III, 530-533
- **Liao, Q. ; Deng, Y.** An accurate segmentation method for white blood cell images. *IEEE Intl. Sym. on Biomedical Imaging,* 2002, 245-248
- **Ramoser, H. ; Laurain, V. ; Bischof, H. et al.** Leukocyte segmentation and classification in blood-smear images. *IEEE Engineering Medicine and Biology Society,* 2005, 3371-3374
- **Ongun, G. ; Halici, U. ; Leblebicioglu, K. et al.** An automated differential blood count system. *IEEE Eng, Med. and Biology Soc.,* 2001, vol. 3, 2583-2586
- **Einsatz. ; Jiang, K. ; Liao, Q.M. ; Xiong, Y.** A novel white blood cell segmentation scheme based on feature space clustering. *Soft Comput.,* 2006, vol. 10, 12-19
- **H.M. Aus ; H. Harms ; V. ter Meulen ; U. Gunzer.** Statistical Evaluation of Computer extracted Blood Cell Features for Screening Populations to detect Leukemias. *NATO ASI Series,* vol. F 30
- **Chen, S. ; Shih, T.Y.** On the evaluation of edge preserving smoothing filter. *Proceedings of Geoinformatics,* 2002